# EUROPÄISCHE PATENTSCHRIFT

(11) **EP 1 849 432 B1**
(45) Veröffentlichungstag und Bekanntmachung des Hinweises auf die Patenterteilung: **03.06.2009**
(21) Anmeldenummer: 07090077.4
(22) Anmeldetag: 19.04.2007
(51) Int. Cl.: A61C 8/00

(54) **Dentalimplantat**
Dental implant
Implant dentaire

(30) Priorität: 25.04.2006 DE 202006006920 U; 24.05.2006 DE 202006008702 U; 27.06.2006 DE 202006010202 U
(43) Veröffentlichungstag der Anmeldung: 31.10.2007
(73) Patentinhaber: Biomed Est., 9490 Vaduz (LI)
(72) Erfinder: Ihde, Dr. Stefan, 8738 Uetliburg (CH)
(74) Vertreter: Radwer, Dieter

(56) Entgegenhaltungen:
- WO-A-20/07060507
- DE-A1- 3 527 668
- US-A- 5 769 630
- US-A1- 2001 038 996
- US-A1- 2003 003 419
- US-A1- 2005 106 535
- US-A1- 2005 272 007

## Beschreibung

Die Erfindung betrifft ein Dentalimplantat, das nach der Insertion durch basale Osseointegration im Kieferknochen verankert wird und als Basisteil für die Aufnahme und Befestigung einer künstlichen Zahnkrone oder einer Suprakonstruktion dient.

Dentalimplantate der vorgenannten Gattung sind allgemein bekannt - EP 98250395.5, US 4,815,974 - und unterliegen einer ständigen Weiterentwicklung und Verbesserung, um beispielsweise das Schmerztrauma zu verringern, die Einheildauer durch Forcierung der Bildung von neuem Knochengewebe zu verkürzen und eine dauerhafte feste Verankerung im Kieferknochen zu erreichen. Trotz der ständigen Weiterentwicklungen und Verbesserungen blieb der grundlegende konstruktive Aufbau dieser Implantate, der durch ein Fuß- oder Basisteil, beispielsweise in Form einer Scheibe oder eines Ringes und einem orthogonal zum Fuß- oder Basisteil angeordneten Schaft gebildet wird, unverändert.

Im Hinblick auf die Knochenintegration werden Implantate aus biokompatiblem Material hergestellt. In erster Linie kommen hierfür das Titan oder seine Legierungen mit Aluminium, Vanadium, Niob, Zirkon oder Molybdän in Frage.

Zweifellos weisen diese Implantate heute einen hohen Perfektionsgrad auf. Müssen jedoch Implantate mit einem relativ großen Implantatfuß oder relativ langen Implantatschaft in einen sich elastisch deformierenden Knochen inseriert werden, kann es vorkommen, dass aus Gründen der biomechanisch günstigeren Knochenheilung die vertikalen Teile des Implantates vor den basalen Teilen des Implantates in der schaftnahen Kortikalis osseointegriert werden. In der Folge kann es passieren, dass das vertikale Implantatteil unter Funktion den ihn umgebenden Knochenarealen folgt, während der basale Implantatteil nicht oder nur mit geringem Mineralisationsgrad integriert wird, weil er von den vertikalen Implantatteilen mitbewegt wird. Solchermaßen integrierte Implantate sind nur bedingt in der Lage, Kräfte effektiv zu übertragen, da die basalen Implantatteile nicht fest genug im Knochen verankert sind. Unerwünschte Lockerungen dieser Implantate lassen sich daher nicht ausschließen.

Dentalimplantate, die durch basale Osseointegration im Kieferknochen verankert sind, werden von der Seite her in den Kieferknochen eingesetzt und für diese Insertion durch Fräsen ein T-förmiges Implantatbett geschaffen. Der vertikale Teil des Implantatbettes, der zur Aufnahme und den Durchgang des Implantatschaftes bei der Insertion dient, sollte möglichst schmal sein, damit der auf diese Weise im Kieferknochen entstandene vertikale Schlitz durch den natürlichen Heilungsprozess möglichst schnell wieder geschlossen wird.

Das Dokument US 2003/003419 offenbart ein Dentalimplantat nach dem Oberbegriff des Anspruchs 1.

Die dentale Praxis hat aber gezeigt, dass die Öffnungsweite des im Kieferknochen auszufräsenden vertikalen Teiles des Implantatbettes nicht beliebig klein gewählt werden kann, da der Schaft eines Implantates mit einem Schaftdurchmesser von < 1,6 mm regelmäßig bricht. Bei einem Schaftquerschnitt mit einem Außendurchmesser von 2 mm ist die Bruchgefahr schon wesentlich geringer, während die Bruchgefahr eines Implantatschaftes mit einem Schaftdurchmesser von 2,3 mm und größer fast Null ist und diese Schäfte so gut wie niemals brechen.

In Relation zu einem relativ kleinen Kieferkamm stellen die auszufräsenden vertikalen Teile des Implantatbettes zum Durchgang und zur Aufnahme des Implantatschaftes mit einem Durchmesser von 2,3 mm und größer einen erheblichen Eingriff in den Kieferknochen dar. Insbesondere, wenn in einem Kieferknochen mehrere Implantatbetten zur Aufnahme von Implantaten hergestellt werden müssen, summieren sich die Knochendefekte für die vertikalen Schlitze, was zu einem Remodelling bedingten Schrumpfen des Kiefers führt. Vor allem im Oberkiefer müssen daher die vertikalen Teile des Implantatbettes für Implantatschäfte > 2,0 mm nach der Insertion des Implantates mit Knochenersatzmaterial gefüllt werden. Dadurch erhöhen sich wiederum die Kosten für die Gesamtbehandlung und es steigt die Gefahr von Infektionen im Bereich des Aufbaumaterials.

Ein weiteres Problem ist der Erhalt der Stabilität von Implantaten gegenüber dem Knochen, in den sie eingebracht worden sind. So werden sowohl in der orthopädischen Chirurgie als auch in der zahnärztlichen und maxillo facialen Implantologie immer wieder Lockerungen von Implantaten beobachtet. Ein gewisser Teil dieser Lockerungen ist dabei auf Infektionen zurückzuführen. Ein Großteil der Lockerungen hat als Ursache jedoch die Überlastung des periimplantären Knochens. So lockern sich bei Knochenbruchplatten die am meisten belasteten Schrauben bzw. die Schrauben, die in den am wenigsten mineralisierten Bereichen positioniert sind, beispielsweise in Zugbereichen oder Flexionsbereichen des Knochens.

Die bisher bekannten Maßnahmen, mit denen diese unerwünschten Prozesse eingeschränkt oder verhindert werden sollen, bestehen darin, die Knochenneubildung im knöchernen Operationsgebiet zu fördern. So wurde unter anderem vorgeschlagen, durch Beschichtungen der Implantatoberfläche mit knochenfördernden Substanzen die Neubildung von Knochengewebe zu beschleunigen und zu stimulieren.

Derartige Verfahren und Vorschläge sind beispielsweise aus DE 600 19 752 T2, DE 196 30 034 A1 und DE 196 28 464 A1 bekannt und beziehen sich überwiegend auf die verbesserte Bereitstellung von Substraten für den Knochenaufbau, wie beispielsweise Tricalciumphosphat, Hydrohylapatit, Ca- und P-Verbindungen aller Art.

Um die Bildung von neuem Knochengewebe zu beschleunigen und zu stimulieren, wurden ferner Maßnahmen zur verbesserten Versorgung des Knochens mit Blut getroffen und schließlich die vermehrte Bereitstellung von Wachstumshormonen und Peptiden aller Art, die den Knochenaufbau beschleunigen, vorgeschlagen.

Alle diese Bemühungen haben bisher nicht zu einem wirklich nutzbaren klinisch guten Ergebnis geführt und hatten in der Praxis keinen durchschlagenden Erfolg, da es mehrere Wochen bis Monate dauert, bis der neu gebildete Knochen auch wirklich mineralisiert und tragfähig geworden ist. Die erwähnten Lockerungen von Implantaten treten jedoch weitaus früher auf.

Der Erfindung liegt die Aufgabe zugrunde, die notwendige vertikale Öffnung des Implantatbettes im Kieferknochen für die Insertion des Implantates und Aufnahme des Implantatschaftes möglichst klein bzw. schmal auszubilden und die dadurch bedingte, erhöhte Bruchgefahr der Implantatschäfte, die in diese schmalen vertikalen Öffnungen des Implantatbettes eingesetzt werden, bei gleichzeitiger Verbesserung der Osseointegrationseigenschaften des Implantates und der Möglichkeiten der Anpassung des Prothetikteiles an die Zahnstellung zu reduzieren.

Erfindungsgemäß wird die Aufgabe durch ein Implantat nach den Merkmalen von Anspruch 1 gelöst. Vorteilhafte Weiterbildungen der Erfindung ergeben sich aus den Unteransprüchen 2 bis 31.

Entgegen den bisher bekannten Lösungen, die einen Implantatschaft mit einem kreisrunden Querschnitt besitzen, weist der Schaft des erfindungsgemäßen Implantates einen ovalen bis elliptischen Profilquerschnitt auf, dessen Durchmesser D, der gleichzeitig die Längsachse des Schaftprofils bildet und in Insertionsrichtung des Implantates angeordnet ist, größer als 2,0 mm und dessen Durchmesser d, über die kleinere Profilachse gemessen, kleiner als 2,0 mm ist. In einer bevorzugten Ausführungsform beträgt der Durchmesser D = 2,3 mm, während für den Durchmesser d = 1,9 mm gewählt worden ist.

Durch die erfindungsgemäße Gestaltung des Schaftprofiles kann die mit chirurgischen Mitteln einzubringende vertikale Öffnung im Kieferknochen relativ klein gewählt werden. Für die Insertion des Implantates sind somit relativ schmale vertikale Schlitze in den Kieferknochen auszufräsen, die sich durch den natürlichen Heilungsprozess schnell schließen, was insbesondere für Implantationen im Oberkieferbereich von Vorteil ist.

Die Verwendung von Knochenersatzmaterial, mit dem bisher vertikale Öffnungen mit einer großen Öffnungsweite geschlossen werden mussten, ist somit kaum noch erforderlich, da das sich neu bildende Knochengewebe Öffnungen des Kieferknochens, die < 2,0 mm sind, in kürzester Zeit überbrückt und oft direkt oder über den Umweg der Geflechtknochenbildung schließt.

Andererseits verringert sich durch den ovalen bis elliptischen Profilquerschnitt der den Lasteintrag aufnehmende und übertragende Querschnitt des Schaftes nicht. Trotz des kleineren Durchmessers d des Profilquerschnittes, der für die Insertion des Implantates über relativ schmale Schlitze im Kieferknochen gewählt werden muss, erhöht sich die Bruchgefahr des Schaftes mit dem erfindungsgemäßen Profilquerschnitt nicht. In Dauerschwingversuchen verdoppelte sich beispielsweise die Anzahl der Lastwechselzyklen bis zum Bruch des erfindungsgemäßen Implantatschaftes bei Schräglast.

Ein weiterer Vorteil des erfindungsgemäßen Profilquerschnittes wird darin gesehen, dass durch das ovale bis elliptische Profil des Schaftes die durch den Kauprozess ausgelösten Kräfte noch gleichmäßiger auf den lmplantatfuß übertragen und in den Kieferknochen eingetragen werden.

Der erfindungsgemäße ovale bis elliptische Profilquerschnitt kann sich über die gesamte freie Länge des Implantatschaftes bis unterhalb des gewindetragenden Kopfes des Schaftes erstrecken und geht dann in einen kreisrunden Querschnitt über. Alternativ hierzu können nur die Teilabschnitte des Implantatschaftes mit einem ovalen bis elliptischen Profilquerschnitt versehen sein, die sich nach der Insertion des Implantates im Kieferknochen liegen.

Einen weiteren Vorteil bietet der längliche Schaft bei basalen Implantaten mit runder Basisscheibe. Diese Basisscheiben sind an sich nicht rotationsgesichert und könnten sich im Knochen leicht drehen. Durch die längliche Form des vertikalen Implantatanteils entsteht auch bei diesen Implantaten eine Rotationssicherung, was in der klinischen Anwendung sehr vorteilhaft ist.

Nach einem weiteren vorteilhaften Merkmal besitzt der Schaft des erfindungsgemäßen Implantates neben der an sich bekannten Anordnung einer ersten Biegezone mit reduziertem Profilquerschnitt unterhalb des Zementier-Kopfes des Implantatschaftes (bzw. unterhalb des Kopfgewindes oder eines Abutments) eine zusätzliche, von der ersten Biegezone beabstandete, zweite, Biegezone, die im Bereich des Schafttfußes vorgesehen ist und knapp über der Basisscheibe des Implantates liegt. In der zahnärztlichen Praxis hat diese Ausbildung den Vorteil, dass mit Hilfe der ersten, oberen Biegestelle eine Parallelisierung des Implantatkopfes an die Zahnstellungen im Mund des Patienten und über die zusätzliche untere Biegestelle die Position des vertikalen Implantatschaftes an sich verändert und gegebenenfalls nachfolgend eine Parallelisierung des Implantatkopfes an die Zahnstellungen vorgenommen werden kann. Durch die vorgeschlagene Lösung kann so der vertikale Implantatteil, d. h. der Schaft in eine andere Richtung gebogen werden als der Kopf des Implantates mit dem Gewindeträger bzw. dem Abutment, ohne hierbei auf die Einschubrichtung des Implantates in das Implantatbett zu achten oder diese zu verändern. Der Gewindeträger oder das Abutment kann also räumlich versetzt werden, was mit nur einer Biegstelle im Schaft bisher nicht möglich war. Entscheidend ist hierfür ist jedoch, dass die beiden Biegestelle ausreichend voneinander beabstandet sind.

In Weiterbildung dieser Ausführung können die zwischen der oberen und unteren Biegezone liegenden Abschnitte des lmplantatschaftes einen etwas größeren Profilquerschnitt besitzen, um sicherzustellen, dass die durchzuführenden Biegungen definitiv im Bereich der Biegezonen erfolgen. Dies wird dadurch erreicht, in dem diese Zonen elliptisch-oval sind, also mehr Materialsubstanz aufweisen als die Biegebereiche, deren runder Durchmesser in etwa dem kleineren Durchmesser der elliptisch-ovalen Bereiche entsprechen.

Für die Verbesserung der Osseointegrationseigenschaften unterbreitet die Erfindung unterschiedliche Lösungsvorschläge. Im Gegensatz zu den bisher bekannten Implantaten können die basalen und vertikalen Implantatteile nicht aus dem gleichen Material, sondern aus unterschiedlichen Materialien bestehen, die sich im Hinblick auf ihre Biokompatibilität und im Hinblick auf die Knochenintegration unterscheiden. Dabei werden die Materialien so ausgewählt, dass die basalen Implantatteile schneller und besser osseointegrieren als die vertikalen Implantatanteile.

Eine vorteilhafte Ausführung besteht beispielsweise darin, dass die basalen Implantatteile aus Titan oder einer seiner implantierbaren Legierungen hergestellt sind, während die vertikalen Implantatteile aus einer Legierung auf der Basis von Co, Cr und Molybdän bestehen.

Unterstützt werden die unterschiedlichen Integrationstendenzen auch dadurch, dass die Oberflächen der Implantatteile eine unterschiedliche Rauhigkeit aufweisen. Besonders vorteilhaft sind solche basalen Implantate, die einen hochglanzpolierten vertikalen Schaft besitzen, während die Basisscheiben eine leichte Oberflächenvergrößerung aufweisen, die beispielsweise durch Sandstrahlen oder durch mechanisches Aufbringen einer Micro -Struktur hergestellt wurde. Klinisch erweist es sich als zusätzlicher Vorteil, wenn bei extraoralen Implantaten, d.h. bei Implantaten zur Verankerung von maxillo-facialen Epithesen, die vertikalen Implantatteile nicht aus Titan hergestellt sind, sondern aus leichter zu reinigendem und sich weniger mit einer Plaque besiedeInden Material, wie Stahl, CoCrMo oder Zirkon oder deren Derivaten und Legierungen.

Fertigungsseitig werden die basalen und vertikalen Implantatteile separat hergestellt und anschließend durch Kraft- oder Formschlussverbindungen miteinander verbunden. Vorteilhafte Verbindungen sind Schraubverbindungen oder Bajonettverschlüsse. Durch die Osseointegration und die Bildung von neuem Knochengewebe sind solche Verbindungen außerordentlich stabil.

Implantate der erfindungsgemäßen Art können dann besonders vorteilhaft eingesetzt werden, wenn die vertikalen lmplantatteile lösbar mit der oder den Basisscheiben verbunden sind. So können die Basisscheiben im Knochen belassen werden, während die daran befestigten vertikalen lmplantatanteile bzw. Stifte am Ende der Gebrauchsphase von der Basisscheibe gelöst und entfernt werden. Die Basisscheiben verbleiben im Knochen, wo sie sogar (z.B. in der Frakturtherapie bei nochmaliger Fraktur) später wieder verwendet werden können. Insbesondere eine durch eine kleine Punktschweißung gesicherte Schraubverbindung ermöglicht eine solche reversible Verbindung. Andererseits kann die Schraubverbindung auch durch zusätzliches Vernieten oder Verpressen reversibel gesichert werden. In jedem Fall muss aber sichergestellt sein, dass die Kräfte, die zur Zerlegung des Implantats im Knochen nach der Gebrauchsphase aufzubringen sind, um einiges höher liegen als die in der Gebrauchsphase auftretenden Kräfte und dies nach Art und Richtung.

Die unterschiedliche Materialbeschaffenheit der vertikalen und basalen Implantatteile kann erfindungsgemäß auch dadurch realisiert werden, dass am Schaft oder an der oder den Basisscheiben des Implantats eine Beschichtung aus unterschiedlichen Materialien aufgebracht wird und diese Materialien nicht dem Kernmaterial des Implantats entsprechen.

Für die Verbesserung der Osseointegrationseigenschaften sieht die Erfindung ferner Beschichtung der Implantate mit Substanzen vor, die die innere Neubildung von Knochen, das sogenannte Remodelling, zeitlich und örtlich begrenzen, behindern oder unterbinden.

Solche Substanzen werden beispielsweise für die Behandlung der Osteoporose eingesetzt, wenn es darauf ankommt, den Remodelling bedingten Knochenabbau zu verzögern. Diese Substanzen beeinflussen die Aktivität der sogenannten Osteoklasten. Sie reduzieren die Aktivität der Osteoklasten, den knochenabbauenden Zellen, deren Vermehrung oder deren Beweglichkeit (Motilität) im Knochen. Nach dem Stand der Technik werden diese Substanzen bei allgemeinmedizinischen Problemen (z.B. bei Osteoporose) oral oder parenteral zugeführt.

Für den implantologischen Bereich haben diese Substanzen, wenn sie auf diese Weise verabreicht werden, jedoch erhebliche unerwünschte Wirkungen. So können bei Implantatpatienten, beispielsweise bei Patienten, die enossale Zahnimplantate oder chirurgisch-orthopädische Implantate erhalten, schwerste Entzündungen nach der Implantation auftreten. Die berüchtigte Osteomyelitis (Knochenmarksentzündung) und die Osteonekrose, das Absterben von Knochen ohne Einwirkung von Bakterien, sind die gefürchtetsten Komplikationen. Aus diesen Gründen gelten Implantationen bei Patienten, die solche Substanzen aus allgemeinmedizinischen Gründen zu sich nehmen, heute als sehr riskant und annähernd als kontraindiziert. Der Grund hierfür ist recht einfach: Durch die reduzierte Aktivität der Osteoklasten wird der Knochen weniger durchbaut. In der Summe wird er stärker mineralisiert und es fehlt die für die Abwehr wichtige Blutversorgung. Wird ein solchermaßen geschädigter Knochen nun einer Operation ausgesetzt, so kann es, - ungewollt-, zum Eindringen von Bakterien in das knöcherne Operationsgebiet kommen. Diese Bakterien können dann vom körpereigenen Immunsystem mangels ausreichender Blutversorgung nicht mehr abgewehrt werden und können sich ausbreiten.

Gleichermaßen können auch ganze Knochenbezirke unter der Therapie mit Substanzen, die das osteonale Remodelling behindern oder verhindern, absterben. Dies oft unbemerkt, weil ja auch abgestorbener Knochen weiterhin lange Zeit seine strukturelle Integrität besitzt und die Aufgabe der Kraftübertragung und der Darstellung einer morphologischen Baueinheit auch im abgestorbenen Zustand wahrnehmen kann.

Andererseits bricht jedoch überlasteter Knochen, in dem sich zu den Mikroschäden, die aus dem Gebrauch von Substanzen, die das osteonale Remodelling behindern oder verhindern, resultieren, auch noch die im Hinblick auf die strukturelle Integrität schädlichen Reparaturschäden addieren, bereits nach ca. 6 Wochen.

In kontrollierten, histologischen Untersuchungen, die der Erfindung zugrunde liegen, hat sich jedoch gezeigt, dass die schweren Nebenwirkungen der Substanzen, die das osteonale System an der Bildung und seiner Funktion behindern, für den implantologischen Bereich dadurch umgangen werden können, wenn diese Substanzen nicht oral oder parenteral, sondern im Rahmen der eigentlichen Operation lokal, quasi mikrotherapeutisch, zugeführt werden. Eine vorteilhafte Applikationsform ist eine Beschichtung des Implantats mit der wirksamen Substanz. Da viele Implantatoberflächen ohnehin eine bestimmte Rauhigkeit aufweisen, ist das Aufbringen einer solchen Beschichtung kein Problem.

Es hat sich zudem gezeigt, dass sowohl fettlösliche als auch wasserlösliche Substanzen gleichermaßen gut zur Anwendung kommen können. Somit können eine breite Anzahl von Substanzen für die erfindungsgemäße Lösung eingesetzt werden: Neben den Biphosphonaten, namentlich Etidronat, Clodronate, Tiludronat, Pamidronat, Alendronat, Risedroant, Ibandronat, Zoledronat, sind auch Östrogene, TGF-beta, Galluim-Nitrat, Plicamycin, Calcitriol, Calcetonin, Bafilomycin als Wirkstoffe, für die erfindungsgemäße Implantatbeschichtung geeignet.

Auf der Suche nach Substanzen, die im implantologischen Bereich zur Reduktion der osteonalen Aktivität in der Nähe von Implantaten angewendet werden können und nicht giftig sind, wurde ferner gefunden, dass bereits eine dünne Beschichtung mit reinem Kochsalz eine lokal hemmende Wirkung auf die osteoklastische Aktivität im Rahmen des Remodellings hat. Eine solche Beschichtung kann erzeugt werden, indem die Implantate, mit möglichst aufgerauhter Oberfläche an den Teilen, die durch Osseointegration im Kieferknochen eingebunden sind, am Ende des Reinigungsvorganges in eine physiologisch, verträgliche Kochsalzlösung von mindestens 0.9 % eingetaucht und dann vorsichtig abgetrocknet werden. Auf diese Weise verbleibt eine dünne Schicht von reinem Kochsalz auf der Oberfläche. Während der Insertion des Implantats und danach löst sich diese Schicht in der Flüssigkeit und im lokal vorliegenden Blut auf. So entsteht ein Ort höherer Salzkonzentration in dem Knochen, der das Implantat begrenzt. Diese Konzentration beeinflusst das Remodelling, wie die histologischen Untersuchungen zeigten. Es reicht aber nicht, wenn nur die übliche, physiologische Kochsalzlösung vorliegt: Die Konzentrationen im umgebenden Knochen müssen weit höher sein als die, die im Blut physiologischer Weise vorliegen.

Gleiches gilt auch für eine dünne, lösliche Beschichtung mit CaPa, CaSO4 und anderen Knochensubstrat-Substanzen, die eine ähnliche Wirkung wie Kochsalz haben. Entscheidend ist die massive lokale Erhöhung der Konzentration dieser Substanzen und die rasche Löslichkeit der Substanzen. Sie dürfen also nicht fest auf der Oberfläche der Implantate haften, wie beispielsweise bei älteren permanent konzipierten CaP - Beschichtungen oder früheren Hydroxylapatit - Beschichtungen, sondern müssen leicht in die angrenzenden osteonalen Systeme hinein diffundieren können.

Besonders günstige Eigenschaften zeigt auch kolloidal aufgebrachtes reines Silber, beispielsweise in einer Partikelgröße von 0,0001 - 0,01 Mikron. Von dieser Substanz ist bereits bekannt, dass sie auf die bakterielle Besiedlung hemmend wirkt. Es hat sich jedoch gezeigt, dass auch die in osteonalen Systemen vorkommenden Zellen durch Silber gehemmt werden. Eine besonders günstige Wirkung zeigen dabei Konzentrationen zwischen 10 PPM und 1500 PPM.

Wird mit Hilfe der vorgenannten Substanzen also eine hohe lonen- bzw. eine hohe Partikelkonzentration um das Implantat erzeugt, so kann das Remodelling für eine gewisse Zeit unterbunden werden, und zwar so lange, bis die Implantate beispielsweise durch die Prothetik (orthopädisch) geschient werden. Wählt man zur Erzielung des erfindungsgemäßen Effekts ungiftige, abbaubare oder zumindest lösliche Substanzen, so können diese später leicht abgebaut werden, womit der dauerhafte osteopetrotische Effekt wegfällt und der periimplantäre Knochen sich mit der Zeit normal regeneriert. Kolloidales Silber kann beispielsweise durch das später einsetzende osteonale Remodelling aufgegriffen und nach subperiostal oder endostal fortbewegt werden, wo es dann zur endgültigen Resorption und später zur problemlosen enteralen Ausscheidung kommt.

Als Resultat der erfindungsgemäßen Beschichtung liegt nahe der enossalen Implantatoberfläche eine Situation vor, bei der der Knochen räumlich und zeitlich begrenzt annähernd keinerlei Reparaturanzeichen zeigt. Somit bleiben die Implantate postoperativ auch länger stabil.

Mit der Zeit sinkt schon durch einfache Diffusion die Konzentration der für die erfindungsgemäße Beschichtung verwendeten Substanzen: Sie werden durch die im Knochen zirkulierende Flüssigkeit und den Blutstrom so verdünnt, dass ihre Konzentration die Schwelle der therapeutischen Wirksamkeit unterschreitet und ein reguläres Remodelling langsam wieder möglich wird. Zu diesem Zeitpunkt sind die Implantate jedoch längst gut osseointegriert und Gebrauchsschäden (Mikrocracks), die auf den Knochen wirken, können zeitlich nicht mehr mit Reparaturdefekten kumulieren. Zudem erfolgt die Reparatur langsamer.

Um eventuelle lokale Infektionen ebenfalls bekämpfen zu können oder derartigen Infektionen prophylaktisch vorzubeugen, kann es von Vorteil sein, die vorgenannten Substanzen für die Beschichtung mit Antibiotika zu kombinieren. Einzelne der erfindungsgemäß vorgeschlagenen Substanzen sind per se antibiotisch wirksam, z. B. Calciumsulfat, Calciumphosphat und Silber. Daher kann es ausreichen, auch mehrere der genannten Substanzen für die Beschichtung zu kombinieren.

Eine weitere vorteilhafte Substanz besteht in der Kombination von einem Biphosphonat, beispielsweise lbandronat, mit einem Antibiotikum, beispielsweise Treacyclin. Die Verwendung von Bafilomycin für sich alleine vermag hingegen beide Wirkungen zu entfalten. Es wirkt in entsprechender Konzentration als Antibiotikum und zugleich als Hemmer des osteonalen Remodellings.

Die Erfindung wird nachstehend an einem Ausführungsbeispiel kurz erläutert. In der dazugehörigen Zeichnung zeigt,
- Fig.1: das erfindungsgemäße Implantat in schematischer Darstellung,
- Fig. 2: den Schnitt A - A aus Fig. 1,
- Fig. 3: das Implantat nach der Erfindung mit zwei Biegezonen.

Das Implantat 1 nach dem Gegenstand der vorliegenden Erfindung besteht aus dem Implantatfuß 6, der beispielsweise in Form einer Scheibe oder eines Ringes ausgebildet sein kann und einem Schaft 2, der über Stege 7 mit dem Implantatfuß 6 verbunden ist. Vorteilhafter Weise sind der basale Implantatteil in Form der Basisscheibe 9 und der vertikale Implantatteil, der durch den Schaft 2 gebildet wird, aus im Hinblick auf die Knochenintegration unterschiedlich biokompatiblen Materialien hergestellt. So können beispielsweise die Basisscheibe 9 aus Titan oder seinen Legierungen bestehen und der Schaft 2 aus Stahl hergestellt sein, wobei die basalen und vertikalen Implantatteile zunächst getrennt gefertigt und anschließend durch Kraft- oder Formschlussverbindungen zusammengefügt werden.

Der Schaft 2 selbst kann als einfacher Zementierpfosten ausgebildet oder mit einem Kopfgewinde 5 oder mit einem Abutement zur Aufnahme und Befestigung des Aufbauteiles eines dentalen Prothetikteiles versehen sein.

Der Schaft 2 des Implantates 1 besitzt erfindungsgemäß einen ovalen bis elliptischen Profilquerschnitt 3 und ist so zum Implantatfuß 6 angeordnet, dass die Längsachse 4 des Profilquerschnittes 3 bzw. der Außendurchmesser D in Einschubrichtung des Implantates 1 bei der Insertion des Implantates in das zuvor hergestellte Implantatbett liegt. Der erfindungsgemäße Profilquerschnitt 3 des Schaftes 2 kann sich über die gesamte freie Länge des Schaftes 2 bis in den Bereich des Schaftkopfes erstrecken, der im vorliegendem Beispiel mit einem Gewinde 5 versehen ist, oder nur in dem zum Implantatfuß 6 benachbarten Abschnitt des Schaftes 2 vorgesehen sein, der sich nach Insertion des Implantates 1 im Kieferknochen befindet.

Nach einer bevorzugten Ausführungsform beträgt der Außerdurchmesser D des Schaftprofiles 2,3 mm, während der Durchmesser D 1,9 mm ist.

Um möglichst schmale vertikale Schlitze für die Aufnahme und den Durchgang des Implantates im Kieferknochen auszufräsen, sollte der Durchmesser d des Profilquerschnittes 3 < 2,0 mm und der Durchmesser D > 2,0 mm in Abhängigkeit von den in den Kieferknochen einzutragenden Kaukräften gewählt werden.

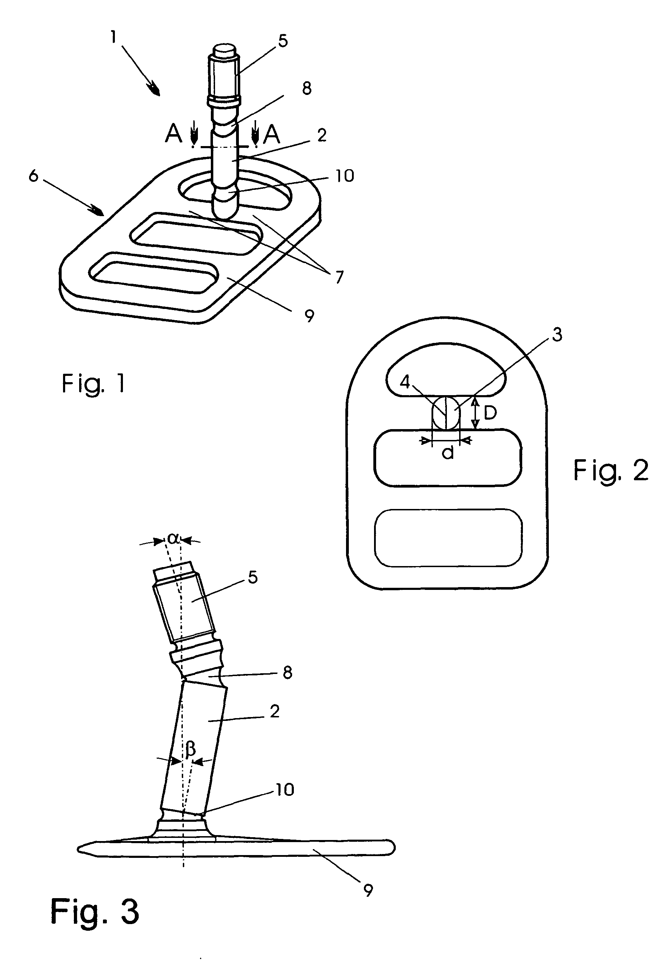

Das Implantat 1 nach Fig. 3, das abweichend zu Fig. 1 einen Schaft 2 mit rundem Profilquerschnitt aufweist, besitzt zusätzlich zu der an sich bekannten Anordnung und Ausbildung einer ersten Biegezone 8 unterhalb des Implantatkopfes eine weitere, zweite Biegezone 10 im Bereich des Implantatfußes 6, die oberhalb der Basisscheibe 9 angeordnet ist. Neben der Parallelisierung des Implantatkopfes an die Zahnstellungen im Mund des Patienten mit Hilfe der oberen Biegezone kann über die untere Biegestelle die Position des vertikalen Implantatschaftes an sich verändert werden. Auf diese Weise besteht letztlich eine weitere, zusätzliche Möglichkeit für die Parallelisierung des lmplantatkopfes.

Die enossalen Oberflächen des Implantates sind nach bekannten Verfahren mit einer aufgerauhten, mikroporigen Oberflächenstruktur versehen, auf die nach Reinigung des Implantats zur Verbesserung der Osseointegrationseigenschaften durch eine zeitliche und örtliche Begrenzung des Remodellings eine haftfähige wasser- oder fettlösliche Ibandronat-Lösung aufgetragen worden ist, wobei der Wirkstoff in einer Dosierung von 3 bis 8 mg in der Beschichtung auf den enossalen Oberflächen des Implantates vorliegt.

Bei Fortfall der mikroporigen Oberflächenstruktur kann die haftfähige, wasser- oder fettlösliche Ibandronat-Lösung in der angegeben Dosierung auch direkt auf die enossale Oberfläche des Implantates aufgetragen werden. Vorzugsweise wird diese Beschichtung unmittelbar vor der Insertion des Implantates auf die enossalen Oberflächen aufgetragen und nach dem Trocknen der aufgetragenen Schicht das Implantat in die vorbereitete Kavität eingesetzt.

### BEZUGSZEICHENAUFSTELLUNG

- 1: Implantat
- 2: Schaft
- 3: Profilquerschnitt
- 4: Längsachse
- 5: Kopfgewinde
- 6: Implantatfuß
- 7: Steg
- 8: Biegezone
- 9: Basisscheibe
- 10: Biegezone

## Patentansprüche

1. Dentalimplantat, das von der Seite in ein auf chirurgische Weise hergestelltes Implantatbett einsetzbar und durch basale Osseointegration im Kieferknochen verankerbar ist, bestehend aus einem Fuß- oder Basisteil in Form einer Scheibe oder eines Ringes und einem orthogonal zum Fuß- oder Basisteil angeordneten Schaft, der als einfacher Zementierpfosten oder als Gewindeträger mit einem kopfseitigen Innen- oder Außengewinde zur Aufnahme und Befestigung des Aufbauteiles einer künstlichen Zahnkrone oder einer Suprakonstruktion ausgebildet ist, **dadurch gekennzeichnet, dass** der Schaft (2) einen, von einer Kreisform abweichenden Profilquerschnitt (3) besitzt und die Längsachse (4) dieses Profils in der Insertionsrichtung des Implantates (1) liegt.

2. Dentalimplantat nach Anspruch 1, **dadurch gekennzeichnet, dass** der Schaft (2) einen ovalen bis elliptischen Profilquerschnitt (3) aufweist.

3. Dentalimplantat nach Anspruch 1 und 2, **dadurch gekennzeichnet, dass** sich der von einer Kreisform abweichende Profilquerschnitt (3) über die freie Länge des Schaftes (2) von der Basisscheibe (9) bis unterhalb eines Gewindes (5) im Kopf des Schaftes (2) erstreckt.

4. Dentalimplantat nach Anspruch 1 und 2, **dadurch gekennzeichnet, dass** der Schaftes (2) im Bereich des Implantatfußes (6), der nach Insertion des Implantates (1) im Kieferknochen positioniert ist, mit einem ovalen bis elliptischen Profilquerschnitt (3) versehen ist.

5. Dentalimplantat nach Anspruch 1 und 2, **dadurch gekennzeichnet, dass** der Durchmesser D des ovalen bis elliptischen Profilquerschnittes (3) größer als 2,0 mm ist und vorzugsweise 2,3 mm beträgt und der Durchmesser d kleiner als 2,0 mm ist und vorzugsweise 1,9 mm beträgt.

6. Dentalimplantat nach Anspruch 1 bis 4, **dadurch gekennzeichnet, dass** im eliptisch-ovalen Schaft (2) vorzugsweise zwei Biegezonen (8; 10) vorgesehen sind.

7. Dentalimplantat nach Anspruch 1 und 6, **dadurch gekennzeichnet, dass** eine erste Biegezone (8) unterhalb des Kopfbereichs des Implantates (1) oder unterhalb eines Kopfgewindes (5) oder unterhalb eines Abutments vorgesehen und eine zweite Biegezone (10) im Fuß des Schaftes (2) über der Basisscheibe (9) angeordnet ist.

8. Dentalimplantat nach Anspruch 6 und 7, **dadurch gekennzeichnet, dass** der Profilquerschnitt der Biegezonen (8; 10) im wesentlichen rund ist und der Durchmesser dieser Zonen in etwa dem kleinen Durchmesser (d) des eliptisch-ovalen Profils des Schaftes (2) entspricht.

9. Dentalimplantat nach Anspruch 1 und 6, **dadurch gekennzeichnet, dass** der basale Implantatteil in Form der Basisscheibe (9) und der vertikale Implantatteil, der durch den Schaft (2) gebildet wird, aus im Hinblick auf die Knochenintegration unterschiedlich biokompatiblen Materialien hergestellt sind.

10. Dentalimplantat nach Anspruch 1, 6 und 9, **dadurch gekennzeichnet, dass** die basalen Implantatteile aus Titan oder seinen Legierungen bestehen.

11. Dentalimplantat nach Anspruch 1, 6 und 9, **dadurch gekennzeichnet, dass** der vertikale Implantatteil aus Stahl besteht.

12. Dentalimplantat nach Anspruch 1, 6 und 9, **dadurch gekennzeichnet, dass** der vertikale Implantatteil aus einer CoCrMo-Verbindung besteht.

13. Dentalimplantat nach Anspruch 1, 6 und 9, **daurch gekennzeichnet, dass** der vertikale Implantatteil aus CoCr in einer Legierung mit weiteren biokompatiblen Materialien besteht.

14. Dentalimplantat nach Anspruch 1, 6 und 9, **dadurch gekennzeichnet, dass** der vertikale Implantatteil aus Zirkon oder einer Zirkonverbindung besteht.

15. Dentalimplantat nach Anspruch 1, 6 und 9, **dadurch gekennzeichnet, dass** die basalen und vertikalen Implantatteile aus einem einheitlichen Kernmaterial hergestellt sind und auf dem vertikalen Implantatteil eine vom Material des basalen Implantatteiles abweichende Oberflächenbeschichtung aufgetragen ist.

16. Dentalimplantat nach Anspruch 1, 6 und 9, **dadurch gekennzeichnet, dass** die basalen und vertikalen Implantatteile aus einem einheitliche Kernmaterial hergestellt sind und auf dem basalen Implantatteil eine vom Material des vertikalen Implantatteiles abweichende Oberflächenbeschichtung aufgetragen ist.

17. Dentalimplantat nach Anspruch 1, 6 und 9, **dadurch gekennzeichnet, dass** die basalen und vertikalen Implantatteile kraftschlüssig miteinander verbunden sind.

18. Dentalimplantat nach Anspruch 1, 6 und 9, **dadurch gekennzeichnet, dass** die basalen und vertikalen Implantatteile formschlüssig miteinander verbunden sind.

19. Dentalimplantat nach Anspruch 1, 6, 9 und 16 bis 18, **dadurch gekennzeichnet, dass** die Verbindung zwischen dem basalen und dem vertikalen Implantatteil reversibel ausgebildet ist.

20. Dentalimplantat nach Anspruch 1, 6 und 9, **dadurch gekennzeichnet, dass** auf den enossalen Flächen des Implantates (1) eine Beschichtung, deren Subtanzen Wirkstoffe enthalten, die im Bereich der Implantationsosteotomie das osteonale Remodelling des Kieferknochens verzögern, aufgetragen ist.

21. Dentalimplantat nach Anspruch 20, **dadurch gekennzeichnet, dass** der Wirkstoff in der Beschichtung aus der Gruppe der Biphosphonaten ausgewählt ist und die Beschichtung vorzugsweise Etidronat, Clodronate, Tiludronat, Pamidronat, Alendronat, Risedroant, Ibandronat, Zoledronat oder deren Kombinationen als wirksame Substanz enthält.

22. Dentalimplantat nach Anspruch 20, **dadurch gekennzeichnet, dass** der Wirkstoff in der Beschichtung aus der Gruppe der Östrogene ausgewählt ist und die Beschichtung vorzugsweise, TGF-beta, Galluim-Nitrat, Plicamycin, Calcitriol, Calcetonin, Bafilomycin oder deren Kombinationen als wirksame Substanz enthält.

23. Dentalimplantat nach Anspruch 20, **dadurch gekennzeichnet, dass** der Wirkstoffe in der Beschichtung aus der Gruppe der im Knochen vorkommenden Bausubstanzen oder Salze des Knochens ausgewählt ist.

24. Dentalimplantat nach Anspruch 23, **dadurch gekennzeichnet, dass** der Wirkstoff in der Beschichtung in einer Konzentration vorliegt, die über der normalen physiologischen Konzentration des jeweiligen Wirkstoffs in Bezug auf die Blutkonzentration liegt.

25. Dentalimplantat nach Anspruch 20, **dadurch gekennzeichnet, dass** die Beschichtung aus Kochsalz besteht.

26. Dentalimplantat nach Anspruch 20, **dadurch gekennzeichnet, dass** die Beschichtung eine Kalciumverbindung enthält.

27. Dentalimplantat nach Anspruch 20, **dadurch gekennzeichnet, dass** die Beschichtung Kalciumphosphat oder Kalciumsulphat enthält.

28. Dentalimplantat nach Anspruch 20, **dadurch gekennzeichnet, dass** die Beschichtung Silber in einer annähernd reinen Form enthält und dieses Silber eine Partikelgröße von 0,001 - 0,01 Mikron besitzt.

29. Dentalimplantat nach Anspruch 20, **dadurch gekennzeichnet, dass** die mikrotherapeutisch, auf das osteonale Remodelling wirksamen Substanzen der Beschichtung mit antibiotisch wirksamen Substanzen kombiniert sind.

30. Dentalimplantat nach Anspruch 21, **dadurch gekennzeichnet, dass** die Beschichtung ein Antibiotikum enthält, das in der ausgewählten Konzentration zugleich das osteonale Remodelling hemmt.

31. Dentalimplantat nach Anspruch 21, **dadurch gekennzeichnet, dass** die Beschichtung in Form einer wässrigen oder fettigen Lösung, eines Gels oder einer Paste vorliegt und unmittelbar vor Insertion auf die enossalen Implantatoberflächen aufgetragen wird, wobei das so beschichtete Implantat nach Trocknung der Beschichtung in das vorbereitete Implantatbett einzusetzen ist.

## Claims

1. Dental implant which can be inserted from the side into a surgically prepared implant bed and can be anchored in the jawbone by basal osseointegration, comprising a foot or base part in the form of a disk or ring and a shaft, arranged orthogonally to the foot or base part, designed as a simple cementation post or as a threaded part with internal or external threads at the end to accept and hold the attachment part of an artificial tooth crown or a superstructure, **characterized in that** the shaft (2) has a non-circular profile cross-section (3) and the longitudinal axis (4) of this profile lies in the direction of insertion of the implant (1).

2. Dental implant according to Claim 1, **characterized in that** the shaft (2) has an oval to elliptical profile cross-section (3).

3. Dental implant according to Claims 1 and 2, **characterized in that** the non-circular profile cross-section (3) extends over the free length of the shaft (2) from the base disk (9) to below a thread (5) in the end of the shaft (2).

4. Dental implant according to Claims 1 and 2, **characterized in that** the shaft (2) is given an oval to elliptical profile cross-section (3) in the region of the implant foot (6) which is positioned in the jawbone after insertion of the implant (1).

5. Dental implant according to Claims 1 and 2, **characterized in that** the diameter D of the oval to elliptical profile cross-section (3) is greater than 2.0 mm and is preferably 2.3 mm, and the diameter d is less than 2.0 mm and is preferably 1.9 mm.

6. Dental implant according to Claims 1 to 4, **characterized in that** there are preferably two bending zones (8, 10) provided in the elliptical-oval shaft (2).

7. Dental implant according to Claim 6, **characterized in that** a first bending zone (8) is provided below the end region of the implant (1) or below a threaded end (5) or below an abutment and a second bending zone (10) is provided in the foot of the shaft (2) above the base disk.

8. Dental implant according to Claims 6 and 7, **characterized in that** the profile cross-section of the bending zones (8, 10) is essentially circular and the diameter of these zones is approximately the same as the small diameter (d) of the elliptical-oval profile of shaft (2).

9. Dental implant according to Claims 1 and 6, **characterized in that** the basal part of the implant in the form of the base disk (9) and the vertical part of the implant formed by the shaft (2) are made of differently biocompatible materials with respect to the bone integration.

10. Dental implant according to Claims 1, 6 and 9, **characterized in that** the basal part of the implant comprises titanium or alloys of titanium.

11. Dental implant according to Claims 1, 6 and 9, **characterized in that** the vertical part of the implant comprises steel.

12. Dental implant according to Claims 1, 6 and 9, **characterized in that** the vertical part of the implant comprises a CoCrMo alloy.

13. Dental implant according to Claims 1, 6 and 9, **characterized in that** the vertical part of the implant comprises CoCr alloyed with other biocompatible materials.

14. Dental implant according to Claims 1, 6 and 9, **characterized in that** the vertical part of the implant comprises zirconium or a zirconium compound.

15. Dental implant according to Claims 1, 6 and 9, **characterized in that** the vertical and basal parts of the implant are made from a uniform core material and a surface coating of a material different from the material of the basal part of the implant is applied to the vertical part of the implant.

16. Dental implant according to Claims 1, 6 and 9, **characterized in that** the vertical and basal parts of the implant are made from a uniform core material and a surface coating of a material different from the material of the vertical part of the implant is applied to the basal part of the implant.

17. Dental implant according to Claims 1, 6 and 9, **characterized in that** the basal and vertical parts of the implant are held together by friction.

18. Dental implant according to Claims 1, 6 and 9, **characterized in that** the basal and vertical parts of the implant are mechanically fitted together.

19. Dental implant according to Claims 1, 6, 9 and 16 to 18, **characterized in that** the connection between the basal and the vertical parts of the implant is designed to be reversible.

20. Dental implant according to Claims 1, 6 and 9, **characterized in that** a coating, the substances of which comprise active ingredients that delay osteonal remodelling of the jawbone in the vicinity of the implant osteotomy of the jawbone is applied to the enossal surfaces of the implant (1).,

21. Dental implant according to Claim 20, **characterized in that** the active ingredient in the coating is selected from the group of bisphosphonates and the coating preferably comprises etidronate, clodronate, tiludronate, pamidronate, alendronate, risedronate, ibandronate, zoledronate or combinations of those as the active ingredient.

22. Dental implant according to Claim 20, **characterized in that** the active ingredient in the coating is selected from the group of estrogens and the coating preferably comprises TGF-beta, gallium nitrate, plicamycin, calcitriol, calcetonin, bafilomycin or combinations of those as the active ingredient.

23. Dental implant according to Claim 20, **characterized in that** the active ingredient in the coating is selected from the group of the structural substances that occur in the bones or salts of the bones.

24. Dental implant according to Claim 23, **characterized in that** the active ingredient in the coating is present at a concentration greater than the normal physiological concentration of that active ingredient in comparison with the concentration in the blood.

25. Dental implant according to Claim 20, **characterized in that** the coating comprises sodium chloride.

26. Dental implant according to Claim 20, **characterized in that** the coating comprises a calcium compound.

27. Dental implant according to Claim 20, **characterized in that** the coating comprises calcium phosphate or calcium sulphate.

28. Dental implant according to Claim 20, **characterized in that** the coating comprises silver in a nearly pure form and this silver has a particle size of 0.001 - 0.01 micrometer.

29. Dental implant according to Claim 20, **characterized in that** the microtherapeutic substances of the coating that are effective on the osteonal remodelling are combined with substances having antibiotic activity.

30. Dental implant according to Claim 21, **characterized in that** the coating comprises and antibiotic which, in the selected concentration, also inhibits the osteonal remodelling.

31. Dental implant according to Claim 21, **characterized in that** the coating is in the form of an aqueous or fatty solution, a gel or a paste and is applied to the enossal surfaces of the implant immediately before insertion, with the implant coated **in that** manner to be inserted into the prepared implant bed after drying of the coating.

## Revendications

1. Implant dentaire pouvant être introduit par le côté dans un lit d'implant créé chirurgicalement et pouvant être ancré dans l'os de la mâchoire par ostéo-intégration basale, composé d'une partie de pied ou de base en forme de disque ou d'anneau et d'une tige perpendiculaire à la partie de pied ou de base, qui est conformée comme un goujon de scellement simple ou comme un support fileté avec un filetage intérieur ou extérieur du côté du sommet pour recevoir et fixer la partie de structure d'une couronne artificielle ou d'une superstructure, **caractérisé en ce que** la tige (2) possède une section de profil (3) différente de la forme circulaire et l'axe longitudinal (4) de ce profil se trouve dans la direction d'insertion de l'implant (1).

2. Implant dentaire selon la revendication 1, **caractérisé en ce que** la tige (2) possède une section de profil (3) ovale à elliptique.

3. Implant dentaire selon les revendications 1 et 2, **caractérisé en ce que** la section de profil (3) différente de la forme circulaire s'étend sur la longueur libre de la tige (2) depuis le disque de base (9) jusqu'en dessous d'un filetage (5) dans la tête de la tige (2).

4. Implant dentaire selon les revendications 1 et 2, **caractérisé en ce que** la tige (2) possède, au niveau du pied d'implant (6) qui est positionné dans l'os de la mâchoire après l'insertion de l'implant (1), une section de profil (3) ovale à elliptique.

5. Implant dentaire selon les revendications 1 et 2, **caractérisé en ce que** le diamètre D de la section de profil (3) ovale à elliptique est plus grand que 2,0 mm et mesure de préférence 2,3 mm et le diamètre d est plus petit que 2,0 mm et mesure de préférence 1,9 mm.

6. Implant dentaire selon les revendications 1 à 4, **caractérisé en ce qu'**il est prévu dans la tige elliptique ovale (2) de préférence deux zones de flexion (8 ; 10).

7. Implant dentaire selon la revendication 6, **caractérisé en ce qu'**une première zone de flexion (8) est disposée en dessous de la partie de tête de l'implant (1) ou en dessous d'un filetage de la tête (5) ou en dessous d'un pilier et une deuxième zone de flexion (10) est disposée dans le pied de la tige (2) au-dessus du disque de base (9).

8. Implant dentaire selon les revendications 6 et 7, **caractérisé en ce que** la section de profil des zonez de flexion (8 ; 10) est sensiblement ronde et le diamètre de ces zones correspond approximativement au petit diamètre (d) du profil elliptique ovale de la tige (2).

9. Implant dentaire selon les revendications 1 et 6, **caractérisé en ce que** la partie basale de l'implant en forme de disque de base (9) et la partie verticale de l'implant formée par la tige (2) sont faites de matériaux ayant une biocompatibilité différente du point de vue de l'ostéo-intégration.

10. Implant dentaire selon les revendications 1, 6 et 9, **caractérisé en ce que** les parties basales de l'implant sont faites de titane ou de ses alliages.

11. Implant dentaire selon les revendications 1, 6 et 9, **caractérisé en ce que** la partie verticale de l'implant se compose d'acier.

12. Implant dentaire selon les revendications 1, 6 et 9, **caractérisé en ce que** la partie verticale de l'implant est faite d'un composé CoCrMo.

13. Implant dentaire selon les revendications 1, 6 et 9, **caractérisé en ce que** la partie verticale de l'implant est composée de CoCr en alliage avec d'autres matériaux biocompatibles.

14. Implant dentaire selon les revendications 1, 6 et 9, **caractérisé en ce que** la partie verticale de l'implant se compose de zirconium ou d'un composé de zirconium.

15. Implant dentaire selon les revendications 1, 6 et 9, **caractérisé en ce que** les parties basale et verticale de l'implant sont fabriquées à partir d'un même matériau d'âme et un revêtement de surface différent du matériau de la partie basale de l'implant est appliqué sur la partie verticale de l'implant.

16. Implant dentaire selon les revendications 1, 6 et 9, **caractérisé en ce que** les parties basale et verticale de l'implant sont fabriquées à partir d'un même matériau d'âme et un revêtement de surface différent du matériau de la partie verticale de l'implant est appliqué sur la partie basale de l'implant.

17. Implant dentaire selon les revendications 1, 6 et 9, **caractérisé en ce que** les parties basale et verticale de l'implant sont reliées entre elles par adhérence.

18. Implant dentaire selon les revendications 1, 6 et 9, **caractérisé en ce que** les parties basale et verticale de l'implant sont reliées entre elles en engagement positif.

19. Implant dentaire selon les revendication 1, 6, 9 et 16 à 18, **caractérisé en ce que** l'assemblage entre les parties basale et verticale de l'implant est conçu pour être réversible.

20. Implant dentaire selon les revendications 1, 6 et 9, **caractérisé en ce qu'**un revêtement dont les substances contiennent des principes actifs retardant le remaniement ostéonique de l'os de la mâchoire est appliqué sur les surfaces endo-osseuses de l'implant (1).

21. Implant dentaire selon la revendication 20, **caractérisé en ce que** le principe actif du revêtement est choisi dans le groupe des biphosphonates et le revêtement contient de préférence comme principe actif de l'étidronate, du clodronate, du tiludronate, du pamidronate, de l'alendronate, du risédronate, de l'ibandronate, du zolédronate ou leurs combinaisons.

22. Implant dentaire selon la revendication 20, **caractérisé en ce que** le principe actif du revêtement est choisi dans le groupe des oestrogènes et le revêtement contient de préférence comme principe actif du TGF beta, du nitrate de gallium, de la plicamycine, du calcitriol, de la calcitonine, de la bafilomycine ou leurs combinaisons.

23. Implant dentaire selon la revendication 20, **caractérisé en ce que** le principe actif du revêtement est choisi dans le groupe des composants constitutifs de l'os ou des sels de l'os.

24. Implant dentaire selon la revendication 23, **caractérisé en ce que** le principe actif est présent dans le revêtement à une concentration supérieure à la concentration physiologique normale du principe actif en question par rapport à la concentration sanguine.

25. Implant dentaire selon la revendication 20, **caractérisé en ce que** le revêtement se compose de chlorure de sodium.

26. Implant dentaire selon la revendication 20, **caractérisé en ce que** le revêtement contient un composé de calcium.

27. Implant dentaire selon la revendication 20, **caractérisé en ce que** le revêtement contient du phosphate de calcium ou du sulfate de calcium.

28. Implant dentaire selon la revendication 20, **caractérisé en ce que** le revêtement contient de l'argent sous une forme approximativement pure et cet argent a une taille de particules de 0,001 à 0,01 micron.

29. Implant dentaire selon la revendication 20, **caractérisé en ce que** les substances du revêtement ayant un effet microthérapeutique sur le remaniement ostéonique sont combinées à des substances ayant une action antibiotique.

30. Implant dentaire selon la revendication 21, **caractérisé en ce que** le revêtement contient un antibiotique qui inhibe en même temps, à la concentration choisie, le remaniement ostéonique.

31. Implant dentaire selon la revendication 21, **caractérisé en ce que** le revêtement se présente comme une solution dans l'huile ou l'eau, un gel ou une pâte et est appliqué immédiatement avant l'insertion sur les surfaces endo-osseuses de l'implant, l'implant ainsi enduit devant être introduit dans le lit d'implant préparé après le séchage du revêtement.
